# EUROPEAN PATENT APPLICATION

(11) **EP 4 759 620 A1**
(43) Date of publication of application: **17.06.2026**
(21) Application number: 24218662.5
(22) Date of filing: 10.12.2024
(51) Int. Cl.: B60L 53/30, B60L 53/60

(54) **OPTIMIZED FLEET CHARGING CONTROL BASED ON INTELLIGENT DEFAULT SETTINGS**

(71) Applicant: HONDA MOTOR CO., LTD., Tokyo 105-8404 (JP)
(72) Inventor: Wollstadt, Dr. Patricia, 63073 Offenbach (DE); Rodemann, Dr. Tobias, 63073 Offenbach (DE); Fischer, Dr. Lydia, 63073 Offenbach (DE)
(74) Representative: Beder, Jens

(57) **Abstract**

The invention concerns a system, a computer program, and a method for controlling a charging system for charging batteries of electric vehicles. The method comprises obtaining default user information of a user for controlling a charging process for charging a battery of an electric vehicle; determining modified default user information for controlling the charging process based on the obtained default user information and historic charging information including at least one of information on historic charging processes of the user, information on historic charging processes of a plurality of users of the charging system, and constraints of the charging system; generating an output signal including the modified default user information, and outputting, via a user interface, the output signal to the user; acquiring, via the user interface, a user input in response to the modified default user information; and generating a control signal for controlling the charging process based on the acquired user input responsive to the modified default user information.

## Description

The disclosure is in the field of charging systems for batteries and, in particular, concerns control of processes for charging the batteries of electric vehicles. The invention proposes a method and a system for controlling a charging system for electric vehicles.

Charging processes for the batteries of electric vehicles (EV) at charging stations are controlled by charging parameters and charging settings. The charging parameters and settings may include an arrival time of the EV at the charging station, the state of charge (SOC) of the EV on arrival at the charging station, an intended or planned departure time of the EV that will terminate the charging process, and a desired SOC of the battery of the EV when terminating the charging process.

Charging control using current smart charging applications for electric mobility usually involves using default user settings for the charging parameters in order to avoid asking the user repeatedly, e.g. each time he arrives at a charging station, for inputting the same charging-related information. Current smart charging applications enable users to obtain services that require users to provide default settings for planned departure times and target SOC levels. Typically, the users make these settings during installation of a software of the smart charging application, or when starting the installed software application for obtaining the service. Regularly, the users choose settings that will initially be rather conservative often severely limiting the options for energy optimization of the charging system having to provide charging services to a plurality of users.

When providing default user information for controlling charging processes, users have the tendency to input a conservative set of default user charging information. E.g., the users predict an intended departure time earlier than the actual time of departure in most cases, or provide a desired SOC at the time of departure that is higher than the actually required SOC by the users.

In application scenarios of a charging infrastructure on a site comprising a plurality of charging stations, that many users with their EVs use and therefore has to satisfy charging demands of a large fleet of EVs, the tendency of users to provide default information for charging processes with default settings that are too conservative proves problematic. The problems may include non-optimal operation of the charging infrastructure with regard to cost, emission of CO₂, aggregated fleet demand of the plurality of users, and other objectives for operating the charging infrastructure. There even occur situations in which the charging infrastructure fails in meeting all user demands on the charging infrastructure and determining a charging schedule that satisfies all user demands is not possible.

There exist approaches for a flexible and extendable EV charging system. US 2022/0327443 A1 proposes a scheduler, which allows configuring of a hierarchy of objectives that are considered in the scheduling process. The charging objectives can be determined automatically by analyzing or classifying user settings, and user behavior and by detecting problems in operation of the charging system, e.g., an unbalanced utilization of the charging stations of the charging system, a low utilization rate, a high peak load, defective charging stations, high cost for acquiring electricity due to high prices, availability of excess electricity of an own power generation capability. US 2022/0327443 A1 proposes assigning a charging objective to each detected problem based on a table. US 2022/0327443 A1 assumes fixed user settings for the charging process and only adapts the target settings of the internal optimizer, when new objectives can be defined or priorities can be changed. Hence, US 2022/0327443 A1 pursues a top down approach that neglects identifying the perspective of the individual user to a large extent when determining feasible charging schedules from the system point of view.

On the other hand, EP 4 372 643 A1 discloses approaches to improve automated scheduling, e.g. in charging systems charging EVs, wherein the automated scheduling is at least partially based on user settings input by a plurality of users. EP 4 372 643 A1 determines alternative user settings, which are settings differing from the obtained user settings, selects at least one alternative user setting and calculates an alternative schedule for each selected alternative setting, and determines, based on the result of the evaluation and the predicted acceptance probabilities, an alternative setting to be suggested to the user whose setting is concerned by the alternative setting. EP 4 372 643 A1 evaluates the calculated alternative schedules and the initially calculated schedule with respect to a quality measure in order to determine an improvement or deterioration for each alternative schedule. EP 4 372 643 A1 obtains a user's response to a suggested alternative setting and selects another alternative setting in case the user declines, and proceeds in this direction until a stop criterion is met. The proposed optimization in automated scheduling results in a complex process that is restricted to rescheduling requests from users and obtaining acceptance from users concerning the proposed schedules. Applicability of the approach of EP 4 372 643 A1 is limited due to the complex negotiation with a plurality of users, and regarding the singular aspect of scheduling times of the scheduled processes.

The invention therefore pursues the object of improving the operation of charging systems with regard to effectiveness, e.g. with regard to operational cost, emission of CO₂, and energy demand over time.

The method according to independent claim 1 in a first aspect, the program in a second aspect, and the system in a third aspect according to the corresponding independent claims provide solutions to the problem.

The dependent claims define further advantageous embodiments.

The method for controlling a charging system for charging batteries of electric vehicles in the first aspect comprises obtaining default user information of a user for controlling a charging process for charging a battery of an electric vehicle. The method proceeds with determining modified default user information for controlling the charging process based on the obtained default user information and historic charging information including at least one of information on historic charging processes of the user, and information on historic charging processes of a plurality of users of the charging system. Based on the modified default user information, the method generates a control signal for controlling the charging process based on the acquired user input responsive to the modified default user information.

The method provides improved default settings to the users of the charging system, wherein the improved modified default user information bases on at least one of past actual usage of the charging system by the user, and other past usage of the charging system by other users, representing an overall fleet demand to the charging system, to improve the effectiveness of the charging system's operation. The modified default user information may be optimized with regard to system cost, CO₂ emission, EV fleet demand, to cite just some potential objectives. Hence, the method computes and uses for charging processes, improved default settings based on at least one of past individual user behavior and past behavior of a plurality of users of the charging system. The method may, for example use a target of computing default settings for future charging processes that would have satisfied a predetermined percentage, e.g. 99%, of all past charging requests of the individual user, while simultaneously allowing to satisfy charging requests of other users.

The method acquires from users default settings thereby avoiding asking users repeatedly for the same information. Using default settings improves usability and user satisfaction. In the field of smart charging solutions for mobility applications, an operator of the charging system operating a charging station needs to know a typical arrival time, a planned departure time and current SOC as well as the planned SOC of the battery to provide a charging schedule that achieves the planned SOC of the battery on departure.

The method according to the first aspect analyzes default settings as provided by the user in the default user information, determines and suggests to the user adaptations to the default settings based on measured differences between the default settings and the requirement to the charging system in the actual world. Hence, the method considers for example a planned departure time included in the default user information with actual departure times in stored historic charging information related to actual past charging sessions of the user.

The method according to an embodiment further includes generating an output signal including the modified default user information, and outputting, via a user interface, the output signal to the user. Via the user interface, the method then acquires a user input in response to the modified default user information. Based on the acquired user input and the modified default user information, the method generates the control signal for controlling the charging process.

The method presents to the user the modified default user information, asking for his confirmation or a further modification from the user's side. In order to improve a probability of the user accepting the modified default user information, the method may use incentives, e.g. financial benefits or highlighting social or environmental benefits for an acceptance of the modified default user information. Hence, the method increases the probability of the user accepting the modified default user information, which may be expected to be less conservative than the user's immediate choice for default user information and to be more advantageous from an operational view on the charging systems operation. In particular, using the user interface to negotiate the modified default user information of a plurality of users, and in particular when using incentive information, the method can be expected to result in a sufficient number of users accepting the altered modified default user information resulting in an operation of the charging system with increased efficiency.

The method according to an embodiment includes determining the modified default user information by using at least one of predetermined heuristics, machine learning, and performing an optimization, in particular a multi-objective optimization.

The method may compute improved default settings either via simple heuristics or via significantly more complex procedures. The latter include machine-learning models that consider trends or complex patterns in the behavior of the individual user, the behavior of the plurality of users (fleet behavior), or both, and multi-objective optimization to satisfy the needs of the community of users, the operator of the charging system, or particular groups of users.

For example, determining the modified user information using a combination of machine learning, heuristics and multi-objective optimization may use machine learning for predicting expected hours of sunshine based on season, e.g. also including information from a weather forecast. Using heuristics enables predicting an amount of energy generated by a photovoltaic system and therefore with a small CO₂ -footprint, and performing a multi-objective optimization for reducing CO₂ -footprint and system cost based on the historic charging behavior of the plurality of users of the charging system. The computed default settings of the modified default user information for the user therefore combine the advantage of using default settings for the charging session, which is uncomplicated and simple to comply with from the user's perspective, with the advantageous operational characteristics when operating the charging system based on a sophisticated scheduling process.

According to an embodiment, the method for controlling the charging system comprises storing, in a default user information database, the modified default user information as updated default user information in case of the user input accepting the modified default user information included in the output signal.

Thus, the method uses regularly up-to-date default information, thereby ensuring a smooth negotiation of the default user information between the user and the system, simultaneously taking changes in the operational environment of the charging system, and changing constraints for the charging process into account.

The method for controlling the charging system according to an embodiment comprises executing the method upon initial interaction of the user with the charging system, and obtaining the default user information of the user from a user input via the user interface.

Thus, the default user information based on which the charging system proposes to perform the charging system not only considers the preferences of the user as the current charging systems using default information, but also take into account other aspects including historic charging information for at least one of information on historic charging processes of a plurality of users of the charging system, and constraints of the charging system.

According to an embodiment, the method for controlling the charging system comprises repeating executing the method after a predetermined time since determining the modified default user information has elapsed.

Thus, the method ensures that changes of the operational environment of the charging system, or different preferences of the user reflected in his default setting are taken into account. The satisfaction of the user, as well as the operational characteristics of the charging systems are regularly brought into accordance by determining the modified default user information and the negotiation between user and system via the user interface.

The method for controlling the charging system according to an embodiment includes repeating executing the method after executing for a predetermined number of times charging processes based on a same default user information stored in the default user information database.

Therefore, the method ensures that changes of the operational environment of the charging system, or different preferences of the user reflected in his default setting are taken into account. The satisfaction of the user, as well as the operational characteristics of the charging systems are regularly brought into accordance by determining the modified default user information and the negotiation between user and system via the user interface.

According to an embodiment, the method for controlling the charging system comprises steps of determining whether a current charging behavior of the user deviates from the default user information, and repeating executing the method in case of determining that the current charging behavior of the user deviates from the default user information.

Thus, the method provides the system with the capability to judge when entering a re-negotiation of the default user information with the system according to the preferences may be advantageous. The satisfaction of the user with the charging system will increase, while simultaneously the possibility of adjusting the default user information via determining and negotiating an updated modified default user information, and therefore optimizing operation of the charging system remains.

The method for controlling the charging system according to an embodiment comprises acquiring a user input setting at least one of the predetermined time, the predetermined number, and a threshold for determining whether the current charging behavior of the user deviates from the modified default user information.

Thus, the user may adapt the frequency and the threshold for entering a re-negotiation of his default user information with the system according to his preferences. The satisfaction with the charging system will increase, while simultaneously the possibility of adjusting the default user information via determining and negotiating an updated modified default user information, and therefore optimizing operation of the charging system remains.

The method for controlling the charging system according to an embodiment includes the default user information for controlling the charging process and the modified default user information including an arrival time, an intended departure time, a current state of charge, and an intended state of charge.

Thus, the default user information includes a set of default settings (default parameters) that is descriptive of key elements influencing the execution of the charging process, while simultaneously the set of default settings is manageable from the user's point of view.

The method for controlling the charging system according to an embodiment comprises steps of obtaining personal preference information of the user for the charging process, and determining the modified default user information for controlling the charging process based on the obtained default user information and the historic charging information, and further based on the obtained personal preference information.

The personal preference information includes information on a personal priority of the user concerning specific aspects of the charging process. The personal preference information may include priority information on at least one of a cost efficiency of a charging process, on his priority for the interests of a community of users of the charging system, and ecological characteristics of the charging process, e.g. use of electric energy from renewable sources for charging the battery of the EV.

Using the personal preference information for determining the modified default user information enables the system on the one hand, to determine the default settings for the charging process according to the personal preferences of the particular user. On the other hand, the system may devise the output signal that is output by the user interface in a manner that nudges the user into accepting the modified default user information presented to him via the user interface.

According to an embodiment of the method for controlling the charging system, generating the output signal including the modified default user information further includes at least one personalized incentive for the user for accepting the modified default user information in the output signal.

The proposed modified default user information can be expected to be less conservative than the default setting of the default user information originally provided by the users of the charging system. The method achieves an improved acceptance of the charging system by asking the individual user for approval of the improved default settings in the modified default user information instead of overwriting the default user information with the modified default user information. However, regarding operation of the charging system of the plurality of users, the system achieves a globally more optimal system operation by nudging the individual users towards confirming the modified default user information, hence increasing the number of users accepting the improved default settings and to overcome the users' inherent preference of more conservative default settings. The method achieves this target by providing the at least one personalized incentive via the user interface to the user.

According to an embodiment of the method for controlling the charging system, the at least one personalized incentive for accepting the modified default user information comprises at least one of financial incentives, social incentive for complying with social norms, framing of potential benefits when confirming the modified default user information, convenience for the user, gamification incentives, and visual cues in design of the user interface.

Gamification incentives may include a display of saved CO₂, saved cost, percentage of energy demand from other users that is satisfied, and similar predicted effects when the user confirms the modified default user information presented to him via the user interface.

Therefore, the method increases the probability of the user accepting the determined modified default user information, and therefore that the user commits to a charging process based on default settings that are mutually beneficial for the charging system operator, the community of the users of the charging system, and the user themselves.

According to an embodiment of the method for controlling the charging system, the method comprises generating the output signal including the personalized incentives for the user for accepting the modified default user information based on the obtained personal preference information.

Thus, the method increases the probability of the user accepting the determined modified default user information, increases the satisfaction of the user due to compliance with his personal priorities, and operations of the charging system with regard to factors such as ecological aspects and cost aspects.

In a second aspect of the invention, a computer program comprises machine-readable instructions executable by a digital processing apparatus, which, when the digital processing apparatus executes the computer program, cause the digital processing apparatus to perform the method according to the first aspect.

According to an embodiment, a non-transitory computer-readable storage medium embodying a program of machine-readable instructions executable by a digital processing apparatus, which cause the digital processing apparatus to perform the method according to according to the first aspect.

A system for controlling a charging system for charging batteries of electric vehicles in a third aspect of the invention comprises a processor configured to obtain default user information of a user for controlling a charging process for charging a battery of an electric vehicle. The processor is further configured to determine modified default user information for controlling the charging process based on the obtained default user information and historic charging information including at least one of information on historic charging processes of the user, information on historic charging processes of a plurality of users of the charging system, and constraints of the charging system. The processor is configured to generate a control signal for controlling the charging process based on the modified default user information.

The system for controlling a charging system for charging batteries of electric vehicles in a third aspect achieves corresponding advantageous effects as discussed with regard to the method for controlling a charging system for charging batteries of electric vehicles according to the first aspect.

The following description of embodiments refers to the figures, in which
Fig. 1 displays a flowchart illustrating major steps of the method according to an embodiment;
Fig. 2 provides an overview over structural elements of the charging infrastructure for battery electric vehicles including a charging system according to an embodiment;
Fig. 3 shows a screen display of a user interface of a smart charging application on a mobile computing device; and
Fig. 4 presents a block-diagram of a charging system according to an embodiment.

In the figures, corresponding elements have the same reference signs. The discussion of the figures avoids discussion of same reference signs in different figures wherever considered possible without adversely affecting comprehensibility and avoiding unnecessary repetitions for sake of conciseness.

Default charging parameter settings, or short: default settings, include a planned departure time of the electric vehicle, a target state of charge level (target SOC) of the battery at the planned departure time of the electric vehicle.

Further charging parameters for the charging process include a state of charge (SOC) on arrival of the EV at the charging station 2, and the time of arrival at the charging station 2.

The constraints of the charging process include a maximum charging current that the charging station 2 supplies to the EV during the charging process.

The constraints of the charging process include a rate of charge and a cost of a rate of charge, a variable that defines a tiered energy-pricing model that the charging station 2 supplies to the EV during the charging process.

When using default profiles with default settings for charging processes, the users of a charging system often provide default profiles that are too conservative, hence risk averse from the user's point of view. Initial default settings are often not based on actual experiences of the users, but are mere assumptions by the users, which may include users that use an EV for the first time. The risk averse default settings provided by the user therefore result in difficulties for planning a charging process to fulfill the requirements of the user due to limited charging resources. The risk averse default settings, have the effect of an unnecessary expensive charging process for the individual user, and may even result in demands from the plurality of users that the charging system cannot satisfy.

In an example scenario, at a facility, an individual user provides as default settings an arrival time of 8 am and a departure time of 4pm on a day, while setting the default SOC upon arrival to 30% and the required SOC at departure time to 80%. In many cases, the arrival time at the facility automatically recorded, and the current SOC on arrival at the facility is acquired from the EV. The actual departure time of the user is however often later than the provided 4pm, while this regular consumption for commuting purposes is smaller than the demand indicated in the default settings, e.g. a SOC of the battery of his EV at the time of departure of 60% suffices. Hence, the user requests default settings in his default user information that correspond to an energy demand before 4pm, which may coincide with the preferred departure time of the majority of employees at the facility. Providing energy to all employees within the same time frame may be more costly to the operator of the charging system due to variable energy prices that have a higher price per kW during peak demand hours than during hours of less demand on the energy grid. In some instances, an operator may even be prevented from procuring electric energy from the grid for satisfying all demands from the plurality of users, due to contractual obligations based on the contract with the energy supplier or for technical due to limitations in power grid. If many users overestimate their demand similarly, the charging processes over the plurality of users may be less efficient and may result in higher costs and CO₂ emission disadvantageous for the operator of the charging system, as well as his customers and users.

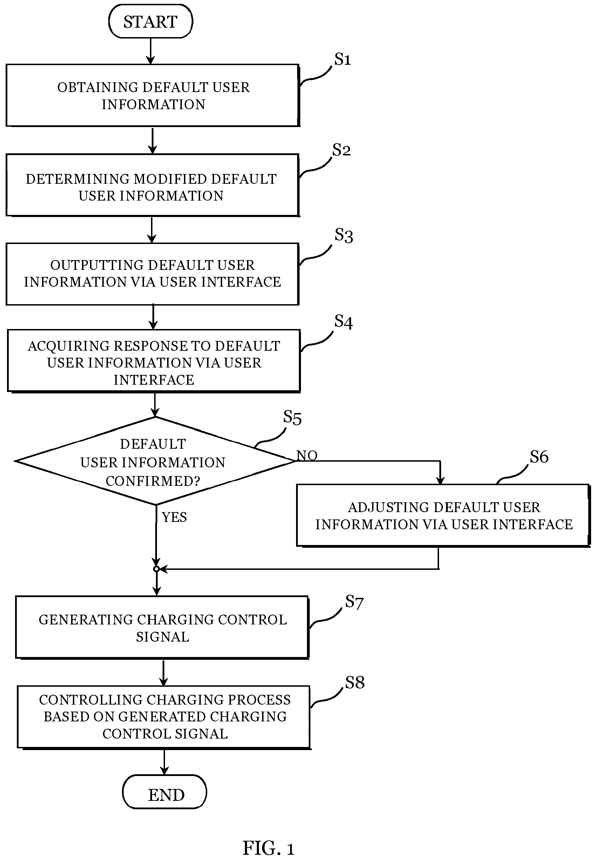

Instead of accepting default users input by the users, or obtained from a default user information database, a system implementing the method illustrated in fig. 1 calculates modified default users based on actual historic user behavior.

The discussion of an embodiment of the method and the system uses a scenario of a smart charging system that controls charging of batteries of a vehicle fleet comprising a plurality of EVs at a facility of a company. The users of the smart charging system are employees of the company that work at the facility and drive the EVs charged at the facility during work hours.

The objectives of the charging system include to collectively satisfy the charging demand of the plurality of EVs, while simultaneously minimizing charging costs associated with the operation of the charging system and reducing CO₂ emission generated by the charging system. Operation of the charging system minimizes the costs by distributing charging processes over the day in order to avoid peaks in energy demand by the charging system, which the energy provider has to supply in addition to a local regenerative energy supply at the facility. Additionally, energy supplied by the power grid to the factory and the charging system is cheaper in the early morning hours and again beginning in the late afternoon of the working day. Minimizing CO₂ emission is achieved by using regenerative energy produced locally at the facility. E.g., the facility may use a photovoltaic system that generates green energy, hence CO₂-neutral electric energy at times of sufficient sunshine.

Fig. 1 shows a flowchart illustrating steps of the method for charging batteries of electric vehicles according to an embodiment. A system 1 that controls a charging system including a plurality of charging stations 2 implements the method.

In step S1, the method obtains default user information of a user for controlling a charging process for charging a battery of an electric vehicle (EV). The EV is associated with the user.

Referring to the application scenario of the charging system at the facility, the users with their EVs arrive at the facility in the morning and request charging the battery of their EV. The user enters via a dedicated user interface of the system 1 on a personal digital device 4 a current SOC of the battery of the EV, a planned departure time, and a desired SOC of the battery of the EV at the planned departure time. In step S1, the system 1 obtains default user information of the user including default settings for each of these default settings (default parameters) from a user-default-information database 11. The system 1 provides the obtained default user information via a user interface to the user to allow the user to start a charging process with the default settings of the default user information with one click. Thus, the system 1 minimizes the interaction of the user with the system 1 and improves user experience, satisfaction of the user with the system 1, and acceptance of the system 1 by its users.

In step S2, the method proceeds with determining modified default user information for controlling the charging process based on the obtained default user information and historic charging information including at least one of information on historic charging processes of the user, information on historic charging processes of a plurality of users of the charging system, and constraints of the charging system.

All historic charging processes performed by the charging system are stored with their actual parameter settings as historic charging information in a historic-charging-information database 12.

Upon initial interaction with the system, the system requests the new user to initially set charging default settings via the user interface.

Alternatively, in the first interaction of the new user with the charging system, the system 1 determines the modified default user information including (initial) default settings based on the historic charging processes stored in the historic-charging-information database 12. The system 1 may use a combination of machine learning and optimization to determine the initial default settings.

In addition, the system 1 requests the user to provide personal preferences for charging the battery of the EV, e.g., including whether a priority of the user is to charge the battery with priority on cost-efficiency, priority on community-friendly charging, or priority on ecological charging. The system 1 may use the information on personal preferences to nudge users towards accepting improved modified default user settings in the modified default user information via personalized messages and a respective design of the user interface. The system 1 generates at least one personal incentive based on the information on personal preferences.

The system 1 uses machine learning to predict expected hours of sunshine over the day given the current season of the year. The system may further acquire weather forecast information for predicting the expected hours of sunshine. Based on the predicted hours of sunshine, the system 1 computes an expected amount of generated electric energy produced by the photovoltaic system (PV system).

The system 1 uses an optimization algorithm to determine optimal initial default settings for the new user based on the historic charging information recording the charging behavior stored for the other users of the charging system, e.g. the other employees of the company at the facility. The target of the optimization is determining default settings that enable the charging system to satisfy all other expected charging demands input to the system 1, while satisfying the additional constraint of minimizing CO₂ emission by operation of the charging system, observing the additional constraint of the predicted energy generation by the PV system, and while minimizing a cost measure. The cost measure may base on the cost for operating the charging system given the prices for energy over the day provided by the power grid. The optimization algorithm may regard the charging preferences provided by the user via the user interface in a respective weighting of cost-reduction for the individual user, reduction of CO₂-emisssion, or fulfilling collective energy demand of the plurality of users including the user and the plurality of other users.

Having determined the modified default user information for the already known user or the modified user information including the initial default settings for the new user, the method proceeds to step S3.

In step S3, the method then generates an output signal including the modified default user information, and outputs, via a user interface, the output signal to the user. The user interface is implemented on a personal digital device 4 of the user.

The system 1 presents via the user interface to the user the modified default user information including the default settings. The system 1 asks the user to confirm or adjust the default settings.

In particular, the system 1 uses the user interface to nudge the user to accept the modified default settings by highlighting the benefits of accepting the modified default settings.

The user interface highlights an aspect for which the user indicated his or her preference in the preference information, e.g. cost-efficiency, community-friendliness, or ecological beneficence.

The system 1 may use the user interface for applying additional personalized incentives for nudging the user towards accepting the proposed modified default user information. The personalized incentives may include at least one personalized incentive of financial incentives, a social incentive, framing of potential benefits for the user, user convenience, a gamification incentive, and a visual cue.

A financial incentive may include a financial offer to the user, e.g. a predetermined discount on the energy price for the energy consumed for charging the battery of the EV, in case the user confirms the modified default user information including the improved default settings.

A social incentive may include providing information to the user that the user complies with social norms, e.g. each of the plurality of users including the user and the other users obtains a share of the available energy with low or no CO₂ emission, in case the user confirms the modified default user information including the improved default settings. Another social incentive may include outputting a notification via the user interface to the user of the fraction of the total number of other users, his colleagues, that accepted the modified default user information with the respective modified default settings proposed by the system 1 (social norm nudge).

Framing of potential benefits may include adapting the presentation of the modified default user information output on the user interface so that the user immediately recognizes his personal benefit when confirming the modified default user information including the modified default settings.

User convenience may in particular include a design of the user interface that enables the user to confirm the modified default user information including the modified default settings output via the user interface via a simple one-click process on the user interface. Simultaneously, adjusting the modified default user information including the modified default settings may require the user to proceed to a different window on a graphical, window-based user interface. Hence, the user interface bases acceptance of the modified default user information on a simple and convenient one-click-operation of the user, which nudges the user towards confirming the modified default user information.

Visual cues may include providing information to the user that indicates that reaching a planned SOC of the battery at the planned departure time that exceeds 80% requires a value of the charging current, which may result in a faster battery degradation.

Visual cues may include providing information to the user that indicate that the planned charging session may result in lower cost to the user when performed at different times, e.g. later than the originally planned departure time.

Gamification incentives may base on a gamification approach, in which the user interface displays information on at least one of a total saved amount of CO₂, saved cost for the user, and percentage of satisfied energy demand of the other users for the historic charging processes, determined based on the information stored in the historic-charging-information database 12, together with predicted respective savings if the user confirms the modified default user information presented to him by the system 1 via the user interface.

Then, in step S4, the system 1 acquires via the user interface from the user a user input in response to the modified default user information presented to the user. Either the user confirms the modified default user information by his user input, or he inputs his intention to adjust the modified default user information, or he rejects any changes to the default user information without adjusting the default user information.

In case of the user communicating his intention to adjust the modified default user information output via the user interface, the method proceeds to step S6. In step S6, the user interface presents the user with the possibility to adjust the default settings of the modified default user information. In particular, the user interface presents the determined values for default settings of the modified default user information as a starting point for adjusting the default settings of the modified default user information by the user by using an input element of the user interface. Thus, the user is guided towards performing only small changes for the default settings of the modified default user information. The user may provide the user input for adjusting the default settings of the modified default user information via alphanumeric input elements of the user interface, displayed slider input elements of the user interface, or input elements of a personal digital device of the user on which the user interface is displayed. The method then proceeds with the adjusted values as default settings of the modified default user information to step S7.

In case of determining in step S5, that the user confirmed the modified default user information presented to him via the user interface, the method proceeds to step S7.

If the system 1 determines in step S5, that user opts to adjust the modified default user information presented to him via the user interface, the default settings of the modified default user information are used as a starting point for the adjustment of the default settings of the modified default user information via the user interface. This has the effect of the user being nudged towards performing only small amendments of the presented default settings of the modified default user information via the user interface.

In case of the user confirming the modified default user information presented to him via the user interface, the method proceeds to step S7. In step S7, the system 1 generates a control signal for controlling the charging process executed by the charging system based on the acquired user input in response to the modified default user information. In the embodiment of fig. 1, the system 1 generates the charging control signal based on the confirmed modified default user information. The system 1 then outputs the generated charging control signal to the charging system for controlling the charging process of charging the battery of the EV of the user based on the charging control signal in step S8.

After the new user has accepted the modified default user information including the modified default settings in step S5, or has adjusted at least one modified default setting of the modified default user information in step S6, the system 1 stores the modified default user information as the default user information associated with the user in the user-default-information database 11.

For every further interaction with the charging system, the system 1 presents to the user via the user interface the default user information stored in the user-default-information database 11. The system 1 has the capability to start charging of the battery of the EV of the user using the default settings of the default user information with one click.

Alternatively, the user may adjust the default settings of the default user information presented to him via the user interface for the individual charging session if preferred by the user.

The system 1 stores the actually used charging settings of each charging session of each user in a central charging database, the historic-charging-information database 12.

The system 1 tracks the interactions of the charging system with the user. After a predetermined number of charging requests by the user, the system 1 asks the user if the default settings of the default user information should be adapted to improved default settings. If the user agrees, the system 1 computes improved default settings for determining modified default user information and presents the determined modified default user information via the user interface to the user. The system 1 performs the steps S1, S2, S3, S4, S5 as discussed above.

Alternatively or additionally, the system 1 may determine a deviation between the actual charging settings stored in the historic-charging-information database 12 and the current default user settings included in the default user information stored in the user-default-information database 11. If the determined deviation for at least one parameter exceeds a predetermined threshold, e.g., 5% of at least one default setting, the system 1 asks the user via the user interface whether to adapt the current default settings of the default user information stored in the user-default-information database 11 to modified default user information. In case of the user accepting the proposed adaptation, the system 1 adapts the current default settings of the default user information stored in the user-default-information database 11 to modified default user information based on the process of steps S1, S2, S3, S4, S5 discussed above.

The system 1 may offer the user the option via the user interface to amend meta-parameters, e.g. a number of executed charging sessions after which a user is asked to adapt the default settings of the stored user information, or the predetermined threshold that triggers the process of adapting the default settings of the stored user information. This further increases acceptance of the system 1 by its users.

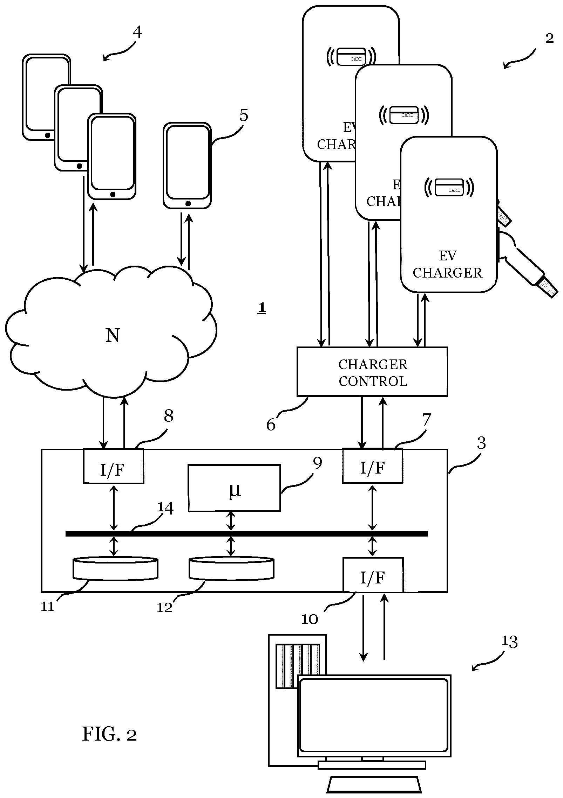

Fig. 2 provides an overview over structural elements of the charging infrastructure for battery electric vehicles including a charging system and a system 1 according to an embodiment. The system 1 may be part of the charging system.

The charging system is a charging system for charging the batteries of EVs. The charging system comprises a charger controller 6. The charger controller 6 controls a plurality of charging stations 2 of the charging system 1. Each charging station 2 may include, e.g. a wall-box equipped to charge the battery of an EV that a load cable connects electrically with the charging station 2.

The charging station 2 supplies electric energy to the battery of the EV by a charging cable that has an electric connector, which couples electrically to a receiving connector of the EV. Alternatively or additionally, the charging station 2 provides the electric energy to the EV via alternative means, e.g. inductive charging comprising an inductive coil of the charging station 2 magnetically coupled with a receiving coil of the EV.

The charging stations 2 comprise each a power interface to a power grid, which supplies the charging system with electric energy. Fig. 2 does not explicitly show the power interfaces of the charging stations and the power grid. The power grid provides energy from either renewable energy sources, e.g. generated by a photovoltaic system, by wind turbines, or hydroelectric power sources, or generated by conventional energy sources with a respectively larger CO₂-footprint.

The charging stations 2 each may include a communication interface for connecting to at least one of a personal digital device 4, 5 of a user and a charging control system of an EV. The charging station 2 may determine an identity of a user or an EV associated with the user via communication with least one of the personal digital device 4, 5 of the user and the charging control system of an EV.

The charging system 1 comprises a charging control computer 3. The charging control computer 3 outputs a charging control signal via a charging control interface 7 of the charging control computer to the charger controller 6 for controlling the charging processes executed by the charging stations 2 via the charger controller 6.

The charging control computer 3 comprises a processor 9 and at least one data storage (memory). The at least one data storage device comprises in particular the data storage storing the user-default-information database 11 and the historic-charging-information database 12.

The historic-charging-information database 12 stores historic charging patterns for charging processes of charging the batteries of EVs. In particular, the historic charging information database stores, associated with a user, charging parameters settings for charging processes in charging sessions that were executed in the past.

The historic charging information stored in the historic-charging-information database 12 may include historic charging data for an individual charging station 2 including, e.g., information on user identity, time of day of a charging session, duration of charging session, rate of charge during charging session, vehicle type information, pricing information. Pricing information may include demand response, time-of-use pricing signals, real-time pricing. The historic charging information may base on historical time stamps associated with the charging processes, a user profile of the users, an EV profile of the EVs, and utility rate profiles.

The charging control computer 3 comprises a communication interface 8. The charging control computer 3 communicates via the communication interface 8 and a communication network N with a plurality of personal digital devices 4, 5, each personal digital device 4, 5 associated with a user 1, 2, ..., M of the charging system 1.

The personal digital devices 4, 5 include any kind of digital assistant devices, e.g., wireless mobile devices, tablet computers, or may be integrated with an on-board computer system of an EV. Each personal digital device 4, 5 runs a software application that implements the user interface UI of the charging system 1.

The charging control computer 3 comprises an operator interface 10. An operator of the charging control computer 3 may input commands and perform settings of the charging control computer 3, the charger controller 6, and the charging stations 2 using an operator interface device 13 connected to the charging control computer 3 via the operator interface 10.

The operator interface device 13 comprises at least one of a keyboard, a pointer device, a mouse device, a microphone combined with human speech recognition and interpretation software for obtaining input commands from the operator. The operator interface 10 further comprises at least one of a monitor, loudspeaker, and a headset for outputting information to the operator.

The operator interface device 13 may be a computer system as illustrated in fig. 2.

A data bus 14 of the charging control computer 3 connects the individual modules of the charging control computer 3, in particular the processor 9, the operator interface 10, the user-default-information database 11, the historic-charging-information database 12, the charging control interface 7, and the communication interface 8.

The discussed structure of the charger control system 1 is an exemplary structure. For example, the charging control computer 3, the operator interface device 13 and the charger controller 6 may be integrated in one computer or server, or implemented on a plurality of computer or server devices.

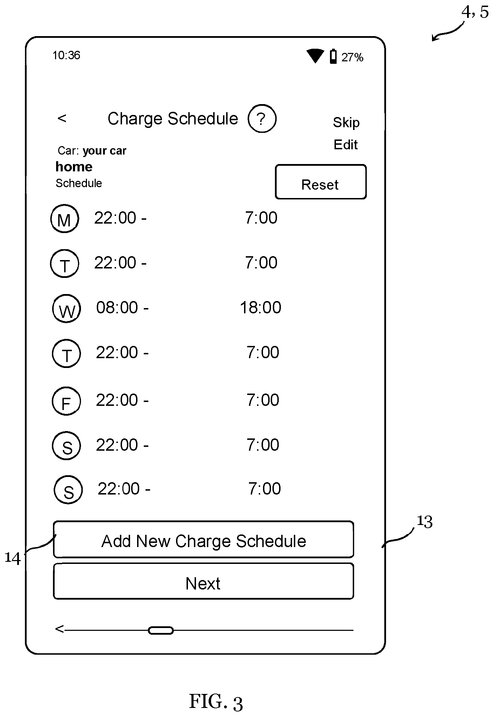

Fig. 3 shows an exemplary screen display 13 of a user interface of a smart charging application on a mobile wireless device. The mobile wireless device is an example of the personal digital device 4, 5.

The user interface enables the user to obtain information from the charging system. The display 13 provides the user with information on the EV associated with the user ("your car") and a charging station 2 ("home"). Furthermore, the display 13 also provides information on planned charging schedules for the days of a week with the respective planned arrival times and departure times. The planned arrival times and arrival times are default settings and are part of the default user information stored in the user-default-information database 11.

Other elements of the default user information not explicitly shown in the display 13 of the user interface include, e.g., a SOC of the battery of the EV on arrival at the charging station 2 and a planned SOC of the battery of the EV at the planned departure time of the EV from the site of the charging station 2. A user may access the further default settings using respective control elements on the display 13, e.g. by operating the slider in the lower portion of the display or other well-known elements of operating touchscreen displays.

The user interface also enables the user to input information to the system 1 and to the charging system. The display 13 includes a virtual button 14 for adding new charging schedules, and enables the user to edit information via the "edit"-element in the upper right display 13. The user interface in particular enables the user to confirm or adjust modified default user information, and individual default settings of the modified default user information.

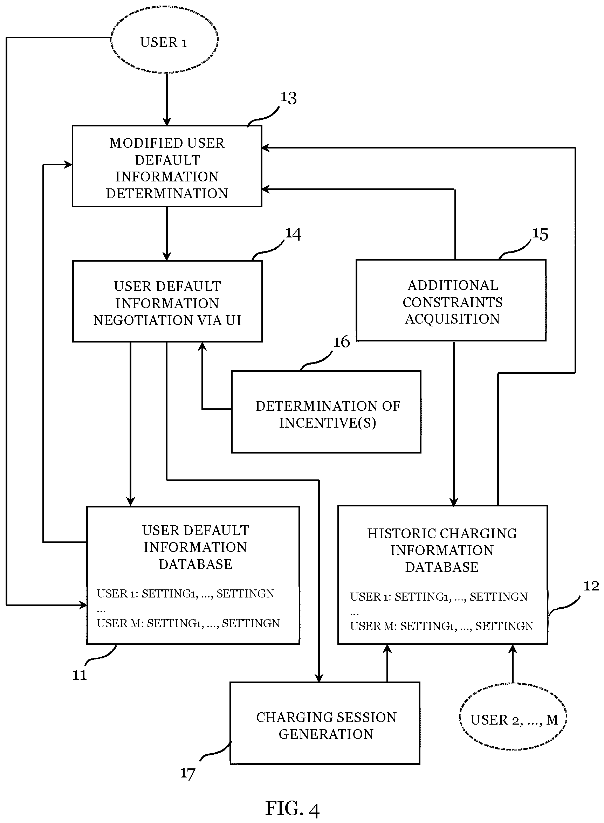

Fig. 4 presents a block-diagram of a system 1 according to an embodiment.

The system 1 includes a plurality of modules, e.g. the modified user-default-information-determination module 13, the user-default-information-negotiation module 14, and additional constraint determination module 15, an incentive-determination-module 16, and a charging-session-generation module 17. The modules may be implemented in software running on the processor 9 of the system. The system 1 further comprises the user-default-information database 11 and the historic-charging-information-database 12.

The modified user-default-information-determination module 13 implements the computation of step S2 as illustrated in fig. 1. The modified user-default-information-determination module 13 determines the modified default user information for controlling the charging process based on the obtained default user information and historic charging information. The historic charging information includes at least one of information on historic charging processes of the user, information on historic charging processes of a plurality of users of the charging system, and constraints of the charging system.

Thus, the modified default settings are calculated based on actual, historic charging information including at least one of information on historic charging processes of the user, information on historic charging processes of a plurality of users of the charging system that are obtained from the historic-charging-information database 12.

The historic-charging-information database 12 stores information on past charging sessions, which the charging-session-generation module 17 stores in the historic-charging-information database 12. The modified user-default-information-determination module 13 retrieves stored information (data) from the historic-charging-information database 12 and uses the retrieved data for calculating the modified default user information including improved default settings for the individual user.

The modified-user-default-information-determination-module 13 may use at least one of the following means of computation: a rule-based calculation of the modified default user information, a prediction of the modified default user information based on a prediction of default settings using machine learning, and a determination of the modified default user information by an optimization of default settings, in particular using a multi-objective optimization algorithm.

In the rule-based calculation of default settings, the modified user-default-information-determination module 13 may use predetermined rules or heuristics to propose improved default settings. An example for a predetermined rule for application in the modified user-default-information-determination module 13 includes, e.g., "use default settings for the user that would have satisfied the requirements of a predetermined number % of all past charging sessions of the user".

For predicting default settings using machine learning, the modified user-default-information-determination module 13 uses a machine learning algorithm for detecting and analyzing patterns in historic behavior of the user and historic behavior of a plurality of other users of the charging system stored in the historic-charging-information database 12. The modified user-default-information-determination module 13 predicts default settings based on the patterns detected during the analysis. An example of such detected pattern may comprise a detected change in energy demand for the EV of the user and for the EVs of the plurality of other users as a function of day of the week. E.g., on a Monday, plural users arrive with a lower-than-average SOC of the battery of their EV. Another detected pattern may refer to seasonal effects, e.g. in the winter the users arrive with a lower-than-average SOC of the battery of their EV due to increased demand for heating, and an increased energy consumption due to using winter tires on their EVs.

Additionally, the modified user-default-information-determination module 13 using machine learning algorithms enables a smooth integration of additional data sources, e.g., weather information or calendar information into the process of determining the modified default user information resulting in further improved default settings in the modified default user information.

Optimization of default settings using optimization algorithms in the modified user-default information-determination module 13 enables identifying improved default settings by optimizing for objectives such as reducing cost or low CO₂-emission, in particular when using multi-objective optimization algorithms.

As indicated, the user-default-information-determination module 13 may use not only one of the discussed different means of computation, but also a combination of two or even the three discussed means for calculating the modified default user information including improved default settings.

In case a user (new user) interacts with the system for the first time, the system 1 of the embodiment uses stored charging behaviors of the other users to calculate an initial proposal for default user information including charging settings from the data stored in the historic-charging-information database 12.

The determination-of-incentive-module 16 determines information on at least one personalized incentive for the user for accepting the modified default user information in the output signal. The determination-of-incentive-module 16 provides the determined information on at least one personalized incentive for the user for accepting the modified default user information in the output signal to the user-default-information-negotiation module 14.

The user-default-information-negotiation module 14 generates the output signal including the modified default user information further includes at least one personalized incentive for the user for accepting the modified default user information in the output signal.

The at least one personalized incentive for accepting the modified default user information may comprise at least one financial incentive for the user when accepting the modified default user information as his default user information for future use by the system 1.

The at least one personalized incentive for accepting the modified default user information may comprise at least one social incentive based on a generally accepted social norm for community-friendly behavior of a human towards other humans of a group.

The at least one personalized incentive for accepting the modified default user information may comprise a framing of potential benefits when confirming the modified default user information. In other terms, the presentation of the output signal may emphasize the advantages of confirming the modified default user information from a perspective of the user.

The at least one personalized incentive for accepting the modified default user information may comprise means to appeal to the convenience of the user when accepting the modified default user information, whereas rejecting or further adapting the modified default user information may appear to require more burdensome or time-consuming actions on the user interface than the confirmation. This effect may be achieved, e.g., by offering a one-click confirmation in contrast to a rejection or an adjustment of the modified default user information in a sub-menu of the user interface.

The at least one personalized incentive for accepting the modified default user information may comprise gamification incentives. Gamification incentives apply a strategy for influencing and motivating a particular behavior of the user, which is to be motivated to pursue a specific action, in present case of confirming the modified default user information. Gamification incentives may include displaying in the output signal to the user values of saved CO2, saved cost, percentage of co-users energy demand, projected effects associated with confirming the modified default user information by the user.

The at least one personalized incentive for accepting the modified default user information may comprise visual cues in design of the user interface that nudge the user towards confirming the proposed modified default user information.

Personalized incentives may include financial benefits for accepting the modified default settings or a higher priority in the charging schedule.

The charging-session-generation module 17 generates a control signal for controlling the charging process based on the acquired user input in response to the modified default user information that is output via the user interface to the user. The confirmed modified default user information including the modified default settings are used by the system for every interaction of the user with the charging system, e.g., every time the user requests charging of the battery of the EV by a charging station 2 of the charging system. The system 1 asks for confirmation of default settings once when the user initially uses the charging system for the first time.

During long-term interaction of the user with the charging system, different strategies may be used alone or in combination for updating the stored default user information including the default settings stored in the user-default-information database 11 of the system 1.

The system 1 presents the user with an update including modified default user information within predetermined time intervals. The predetermined time intervals may be determined by a count value, e.g., counting interactions of the user with the charging system. E.g., in case the number interactions, e.g. executed charging processes, exceeds a predetermined threshold, the system starts a process of updating by determining modified default user information.

Alternatively or additionally, the predetermined time interval may be defined by the time that has elapsed since the user subscribed to the charging system, e.g. in terms of a number of days. E.g., in case the number of days exceeds a predetermined threshold, the system 1 starts a process of updating by determining modified default user information.

Alternatively or additionally, the system 1 presents the user with an update including modified default user information whenever the system determines that a predetermined fraction of the past actual charging settings included in the historic default user information significantly deviates from the current default settings included in the default user information stored in the user-default-information database 11.

In sum, a user will be presented the currently defined default settings in every charging session as the basis for the actually requested charging. The user can either just accept the default settings or change the default settings. The actual charging parameters of an executed charging process are stored in the historic-charging-information database 12 and used for calculating of future default settings by the system 1.

Additionally, the user is asked to accept improved default settings at certain points in time, which are determined by either or both of the above strategies. The actual charging parameters resulting from the default user information negotiation are forwarded to the charger controller 6 to conduct the charging process for the battery of the EV as planned.

The specification discusses embodiments of the system 1 and the corresponding method with regard to the specific application scenario of a charging system for charging batteries of EVs in a facility of a company. The discussed application scenario is independent from whether the EVs are owned and used privately by the users, or are vehicles of the company used for its business purposes.

In an alternative scenario, the system 1 may be used in combination with a public charging system arranged in a densely populated area characterized by a high demand for charging services for the batteries of EVs.

In yet another alternative scenario, the system 1 may be used in combination with the charging system arranged in a harbor for providing charging services for the batteries of electric vehicles that are watercraft.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps.

The indefinite article "a" or "an" does not exclude a plurality.

A single element or other unit may fulfill the functions of several entities or items recited in the claims. The mere fact that different dependent claims recite certain measures and features of the control circuit does not exclude that a combination of these measures and features cannot be combined in an advantageous implementation.

The features described in the discussion of specific embodiments and depicted in the figures may be combined with each other for the invention defined in the attached claims.

## Claims

1. Method for controlling a charging system for charging batteries of electric vehicles, the method comprising
obtaining (S1) default user information of a user for controlling a charging process for charging a battery of an electric vehicle;
determining (S2) modified default user information for controlling the charging process based on the obtained default user information and historic charging information including at least one of information on historic charging processes of the user, and information on historic charging processes of a plurality of users of the charging system;
generating (S7) a control signal for controlling the charging process based on the modified default user information.

2. Method for controlling the charging system according to claim 1, wherein the method further comprises
generating an output signal including the modified default user information, and outputting (S3), via a user interface, the output signal to the user;
acquiring (S4), via the user interface, a user input in response to the modified default user information;
generating (S7) the control signal for controlling the charging process further based on the acquired user input responsive to the modified default user information.

3. Method for controlling the charging system according to claim 1 or 2, wherein
determining (S2) the modified default user information by using at least one of predetermined heuristics, machine learning, and performing an optimization, in particular a multi-objective optimization.

4. Method for controlling the charging system according to one of the preceding claims, wherein the method comprises
storing, in a user default information database (11), the modified default user information as updated default user information in case of the user input accepting the modified default user information included in the output signal.

5. Method for controlling the charging system according to one of the preceding claims, wherein
executing the method upon initial interaction of the user with the charging system, and
obtaining the default user information of the user from a user input via the user interface.

6. Method for controlling the charging system according to one of the preceding claims, wherein
repeating executing the method after a predetermined time since determining the modified default user information has elapsed.

7. Method for controlling the charging system according to one of the preceding claims, wherein
repeating executing the method after executing a predetermined times charging processes based on a same default user information.

8. Method for controlling the charging system according to one of the preceding claims, wherein the method comprises
determining whether a current charging behavior of the user deviates from the default user information, and
repeating executing the method in case of determining that the current charging behavior of the user deviates from the default user information.

9. Method for controlling the charging system according to one of claims 6 to 8, wherein the method comprises
acquiring a user input setting at least one of the predetermined time, the predetermined number, and a threshold for determining whether the current charging behavior of the user deviates from the modified default user information.

10. Method for controlling the charging system according to one of the preceding claims, wherein
the default user information for controlling the charging process and the modified default user information include an arrival time, an intended departure time, a current state of charge, and an intended state of charge.

11. Method for controlling the charging system according to one of the preceding claims, wherein the method comprises
obtaining personal preference information of the user for the charging process;
determining the modified default user information for controlling the charging process based on the obtained default user information and the historic charging information, and further based on the obtained personal preference information.

12. Method for controlling the charging system according to claim 11, wherein
generating the output signal including the modified default user information further includes at least one personalized incentive for the user for accepting the modified default user information in the output signal.

13. Method for controlling the charging system according to claim 12 or 13, wherein
the personalized incentive for accepting the modified default user information comprises at least one of a
financial incentive,
social incentive for complying with social norms,
framing of potential benefits when confirming the modified default user information,
convenience,
gamification incentive, and
visual cue in design of the user interface.

14. Method for controlling the charging system according to claim 13, wherein the method comprises
generating the output signal including the at least one personalized incentive for the user for accepting the modified default user information based on the obtained personal preference information.

15. A computer program comprising machine-readable instructions executable by a digital processing apparatus, which, when the digital processing apparatus executes the computer program, cause the digital processing apparatus to perform the method according to one of claims 1 to 14.

16. System for controlling a charging system for charging batteries of electric vehicles, the system comprising
a processor (9) configured to obtain default user information of a user for controlling a charging process for charging a battery of an electric vehicle,
determine modified default user information for controlling the charging process based on the obtained default user information and historic charging information including at least one of information on historic charging processes of the user, and information on historic charging processes of a plurality of users of the charging system, and
the processor (9) is further configured to generate a control signal for controlling the charging process based on the modified default user information.
